Europäisches Patentamt

European Patent Office

Office européen des brevets

(19)

(11) Numéro de publication: **0 199 676**
**A1**

(12) **DEMANDE DE BREVET EUROPEEN**

(21) Numéro de dépôt: **86810179.1**

(22) Date de dépôt: **17.04.86**

(51) Int. Cl.⁴: **G 06 K 11/00**
**G 06 K 9/22**

(30) Priorité: **26.04.85 CH 1787/85**

(43) Date de publication de la demande:
**29.10.86 Bulletin 86/44**

(84) Etats contractants désignés:
**AT BE CH DE FR GB IT LI NL SE**

(71) Demandeur: **BATTELLE MEMORIAL INSTITUTE**
**7 route de Drize**
**CH-1227 Carouge/Genève(CH)**

(72) Inventeur: **Bechet, Louis**
**Les Gouilles Bonnatrait**
**F-74140 Douvaine(FR)**

(74) Mandataire: **Dousse, Blasco et al,**
**7, route de Drize**
**CH-1227 Carouge/Genève(CH)**

(54) Procédé de stockage numérique d'une courbe analogique et de traçage d'une courbe représentative de cette courbe analogique.

(57) Selon ce procédé, on définit un intervalle élémentaire sur l'un des axes d'un système de coordonnées pour sélectionner une première série de points, on détermine une deuxième série de points ($R_1$, $R_2$, $R_3$), en établissant un rapport seuil entre la corde ($C_1$, $C_1'$) séparant deux points non consécutifs et la somme des cordes ($c_1$, $c_2$, $c_3$; $c_1'$, $c_2'$, $c_3'$) séparant chacun des points consécutifs à l'intérieur de deux points non consécutifs et on choisit l'intervalle (N) entre ces deux points non consécutifs correspondant au plus grand rapport inférieur audit seuil. On retrace ensuite la courbe représentative en établissant entre chaque groupe de trois points non consécutifs une parabole par rapport à un axe de symétrie correspondant à l'axe des intervalles élémentaires.

FIG. 2

# PROCEDE DE STOCKAGE NUMERIQUE D'UNE COURBE ANALOGIQUE ET DE TRACAGE D'UNE COURBE REPRESENTATIVE DE CETTE COURBE ANALOGIQUE.

La présente invention se rapporte à un procédé de stockage numérique d'une courbe analogique d'un système de coordonnées rectangulaires X Y dans une mémoire et de traçage d'une courbe représentative de ladite courbe analogique à partir des valeurs stockées.

On a déjà proposé dans le EP 0030 234 d'enregistrer des signaux de vitesse d'une écriture manuscrite, notamment d'une signature de référence, selon un système de coordonnées rectangulaires, en vue de comparer ces signaux à ceux d'une autre signature, pour déterminer si l'auteur de la signature est le même dans les deux cas. Cette comparaison est appelée à être opérée par un procédé relevant de l'informatique.

Les signaux de vitesse caractéristiques de la référence sont en général destinés à être enregistrés dans une mémoire constituée d'une piste magnétique ou d'une puce placée sur une carte qui est normalement en possession de l'utilisateur. Si le possesseur de la carte n'est pas l'auteur de la signature, il ne sera pas possible à ce possesseur frauduleux de tracer une signature présentant des signaux de vitesses comparables à ceux de la référence, même s'il s'est entraîné à reproduire fidèlement le graphisme de cette signature. Le problème du stockage de la signature est celui de la place, la piste magnétique ou la puce étant appelés à contenir d'autres informations. Or si on désire conserver les signaux de vitesses de la signature de référence avec une fidélité suffisante, aucune carte à mémoire n'aura suffisamment de place pour mémoriser sous forme numérique les données des signaux analogiques de vitesse, aptes à reproduire ensuite avec fidélité ces signaux. Si l'échantillonnage réalisé pour la mise en mémoire ne donne pas une information suffisamment précise, la comparaison qui sera effectuée sur la base de cette référence n'aura aucune signification, dans la mesure où la reconstitution de la référence en vue de la comparaison ne sera pas fidèle au modèle réel.

Le but de la présente invention est précisément de permettre d'enregistrer fidèlement ces signaux de référence avec un nombre de données numériques suffisamment restreint pour être enregistré soit sur une piste magnétique soit sur une puce d'une carte à mémoire du type carte de crédit.

A cet effet, la présente invention a pour objet un procédé de stockage numérique dans une mémoire des composantes de la vitesse d'une signature de référence tracées dans un système de coordonnées rectangulaires selon la revendication 1.

L'intérêt de la solution proposée réside dans le fait que les composantes de la vitesse une fois "comprimées" peuvent ensuite être "décomprimées" en reproduisant très fidèlement les courbes initiales de ces composantes, de sorte que la comparaison entre ces courbes "décomprimées" et celles qui sont issues de la signature que l'on doit identifier n'est pas affectée par ce mode de stockage de la référence.

Le dessin annexé illustre, schématiquement et à titre d'exemple, une forme d'exécution de la mise en oeuvre du procédé objet de la présente invention.

Les figs 1 et 2 sont des diagrammes explicatifs du procédé mis en oeuvre dans la présente invention.

La fig. 3 est un tableau de marche du traitement informatique utilisé pour la mise en oeuvre du procédé.

Les figs 4 à 6 sont des diagrammes explicatifs.

Pour mémoriser une courbe d'un signal analogique selon des données numériques, le problème à résoudre est celui d'un choix représentatifs de points le long de cette courbe, qui permet de la restituer ensuite avec une fidélité suffisante. Il est évidemment possible de sélectionner un grand nombre de points à intervalles très petits, garantissant une restitution fidèle de la courbe. Toutefois, cette mémorisation prend une place trop importante dans la mémoire lorsque celle-ci est constituée par une piste magnétique sur une carte de crédit ou par une puce appelée à contenir d'autres informations.

C'est la raison pour laquelle il s'agit de sélectionner le moins de points possible, tout en les sélectionnant avec discernement, afin de garantir que ces points permettront de restituer la courbe initiale avec une fidélité suffisante. Il s'agit premièrement de déterminer des points sur la courbe à intervalles choisis pour permettre la reproduction fidèle de la courbe. Ensuite, l'opération consiste à sélectionner le moins de points parmi ceux initialement déterminés, à l'aide de critères de sélection qui permettent la reproduction de la courbe initiale avec une précision liée aux critères de sélection choisis. Ces critères de sélection sont appelés taux de compression. Plus ce taux est élevé moins on doit mémoriser d'informations, par contre l'imprécision dans la reconstitution de la courbe initiale est proportionnelle au taux de compression. Il s'agit donc de réaliser un compromis et de définir de cas en cas un taux de compression qui limite l'imprécision.

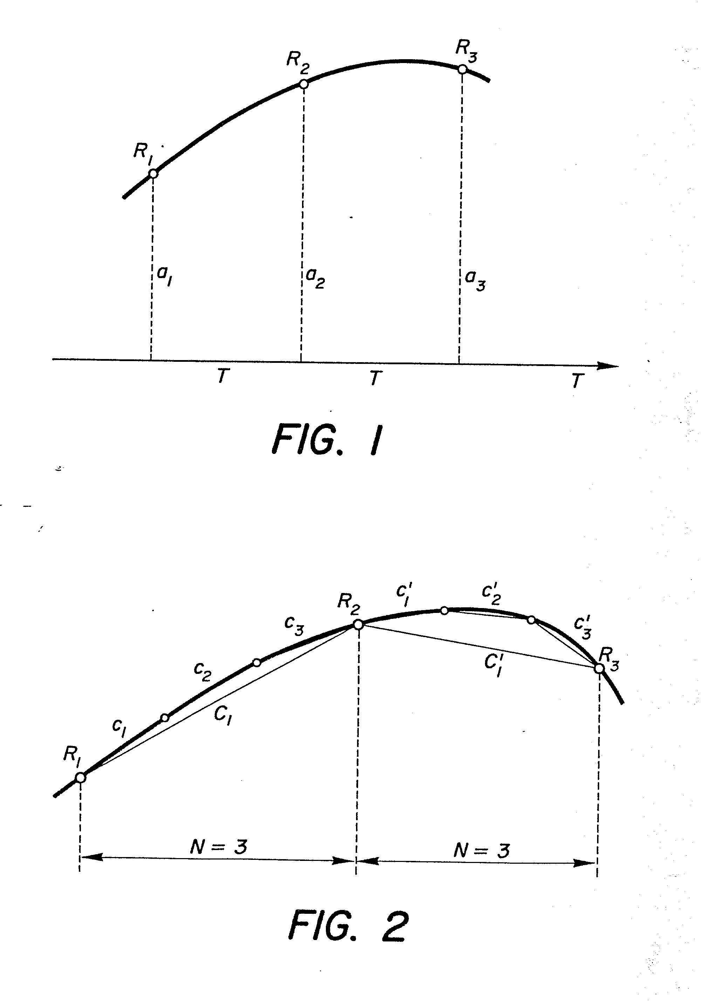

Le mode de sélection qui a été choisi ici est basé sur l'interpolation parabolique. Il s'agit d'un procédé qui est bien adapté à la sélection de points caractéristiques d'une courbe, basé sur le fait qu'il existe toujours une parabole qui passe par trois points quelconque non alignés dans un plan. Si ces trois points ne sont pas choisis de d'importe quelle manière mais par rapport à un axe de symétrie, l'interpolation parabolique montre une propriété intéressante pour le critère de sélection. Si l'on considère à la figure 1 la parabole qui passe par les trois points $R_1$, $R_2$, $R_3$, dont les valeurs x sont séparées par une constante de temps T et dont les amplitudes sont respectivement $a_1$, $a_2$ et $a_3$, l'équation de la parabole est:

$$Y_{(T)} = AT^2 + BT + C$$

Si, pour le calcul de la parabole, on prend comme origine des temps les valeurs x du point central $R_2$, on obtient les relations suivantes pour l'expression des amplitudes des trois points:

$$a_1 = AT^2 - BT + C$$
$$a_2 = C$$
$$a_3 = AT^2 + BT + C$$

De ces trois équations, on déduit les coefficients A, B, C de la parabole:

$$A = (a_1 + a_3 - 2a_2)/2T^2$$
$$B = (a_3 - a_1)/2T$$
$$C = a_2$$

Il est intéressant de constater que les trois coefficients de la parabole peuvent être calculés avec un minimum d'information, à savoir: les amplitudes $a_1$, $a_2$, $a_3$ des trois points et l'intervalle de temps T de ces points.

La sélection des points sur la courbe à mémoriser est fonction des intervalles de temps choisis. Nous allons examiner maintenant sur la base de quels critères ces intervalles seront définis. A cet effet, il est nécessaire de déterminer quelles sont les caractéristiques de la courbe que l'on désire retrouver avec la plus grande précision. Dans le cas de la signature, c'est la position des points que l'on désire retrouver avec une déviation minimum.

A cet effet, le critère qui permettra d'obtenir le meilleur résultat est celui de la corde. Ce test est illustré par la fig. 2. Il consiste à établir un rapport entre la corde $c_1$, $c_1'$ séparant deux points non consécutifs tels que $R_1 R_2$ et $R_2 R_3$ et la somme des cordes $c_1$, $c_2$, $c_3$ respectivement $c_1'$, $c_2'$, $c_3'$ des points consécutifs de la courbe. Lorsque le rapport dépasse un seuil prédéterminé, on réduit l'intervalle entre deux points non consécutifs d'un intervalle élémentaire séparant deux points consécutifs et on choisit comme intervalle de sélection de points sur la courbe celui dont le rapport est juste inférieur à ce seuil. Le seuil est déterminé en fonction de la précision avec laquelle la courbe peut ensuite être reconstituée.

On expliquera en détail par la suite et en se référant au tableau de marche, la mise en oeuvre pratique de ce critère de sélection.

Les signaux de vitesse de la signature de référence sont enregistrés sous la forme de deux courbes correspondant aux composantes de vitesse VX et VY selon deux axes de coordonnées rectangulaires. De ce fait, on pourrait envisager d'appliquer le mode de sélection sur chacune des courbes VX et VY séparément. Toutefois, une telle démarche ne se justifie pas pour plusieurs raisons. Le mode de comparaison de la référence avec la signature n'est pas réalisé à partir des composantes séparées mais en combinant ces deux composantes pour former un odogramme. Le traitement de chaque composante de vitesse nécessiterait le double de travail de calcul. Pour un même critère de précision, le "taux de compression" obtenu serait inférieur sur chaque composante à celui obtenu sur l'odogramme.

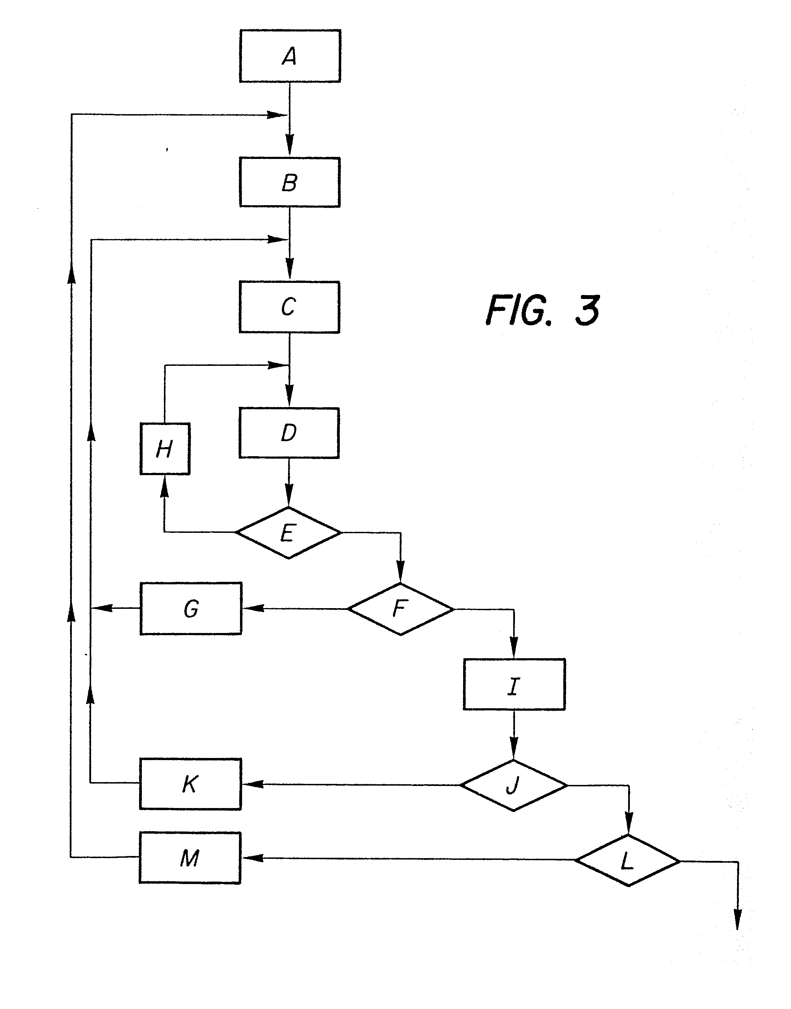

On va expliquer maintenant à l'aide du tableau de marche de la fig. 3, le processus utilisé pour effectuer la sélection d'un nombre déterminé de points.

Le rectangle A fixe une tolérance du rapport arc/corde qui va servir à calculer l'intervalle admissible entre les différents points sélectionnés. Au préalable, l'odogramme du signal de référence dont la durée est limitée à 2,4 s. est divisé en 120 points espacés donc de 0,01 s. qui correspond à l'intervalle de temps initial T. L'objectif est de sélectionner 72 points. Le rectangle B correspond à l'initialisation du calcul et le rectangle C fixe un premier intervalle de calcul qui correspond à un saut de deux espaces c'est-à-dire du point 1 au point 3. Dans le rectangle D on effectue alors le calcul du rapport entre la somme des cordes du point 1 au point 2 et du point 2 au point 3 et la corde du point 1 au point 3.

Le losange de décision E établit si le rapport ainsi calculé est plus grand ou plus petit que la tolérance maximum fixée initialement par le rectangle A. Si ce rapport est plus grand, la branche de droite du losange E est activée et le losange F indique au rectangle G que le saut de 2 est refusé, la tentative de saut du point 1 au point 3 est donc abandonnée de sorte que l'on passe du point 1 au point 2 et on revient au rectangle C qui commande un saut de 2 intervalles soit du point 2 au point 4 et on recommence l'opération du calcul du rapport des cordes dans le rectangle D suivi du test de tolérance dans le losange E. Si ce rapport est plus petit que la tolérance fixée, la branche de gauche du losange E est activée et le rectangle H commande d'augmenter le saut d'un intervalle. Si le test de tolérance du losange E indique cette fois que le rapport est plus grand que la tolérance, c'est la branche de droite du losange E qui est activée et passe au losange F. Si le saut pour lequel le rapport des cordes est plus grand que la tolérance est supérieure à 2 c'est la branche de droite du losange F qui est activée et transmet la valeur du dernier saut pour lequel le rapport des cordes est inférieur à la tolérance et gardé en mémoire dans le rectangle H, au rectangle de stockage des valeurs sélectionnées I. Ce rectangle I indique au losange J le nombre de points qui ont été traités jusqu'ici. Si ce nombre est inférieur à 120 dans cet exemple, la branche de gauche du losange J est activée et indique au rectangle K qu'il faut passer au point suivant. La même opération que celle décrite est répétée entre les points 4, dernier point sélectionné dans cet exemple et 6. Lorsque le nombre d'intervalles depuis le point 4 a été déterminé par la boucle D, E, H, le nouveau point sélectionné est transmis au losange F puis au rectangle I. Lorsque le losange J indique que les 120 points ont été examinés, on effectue le rapport entre le nombre de points initiaux et celui des points sélectionnés dans le losange L pour établir la valeur du facteur de compression global. Si ce facteur indique que la compression est trop importante, c'est-à-dire que l'on dispose encore de la place dans la mémoire pour atteindre les 72 points fixés dans cet exemple, la branche de gauche du losange L est activée et indique au rectangle M qu'il y a lieu de réduire la tolérance initiale dans le but d'augmenter le nombre de points sélectionnés.

Tout le processus décrit ci-dessus est recommencé sur la base de la nouvelle tolérance, et ceci jusqu'à ce que le facteur de compression atteigne une valeur déterminée.

Le tableau ci-dessous montre à gauche sept points de l'odogramme original avec les valeurs VX et VY aux instants respectifs $t_1$ à $t_7$ et à droite les valeurs des points sélectionnés avec en regard le nombre d'intervalles T séparant ces points. Lors de la reconstitution de la courbe originale, les trois points sélectionnés permettront de faire passer une parabole par rapport à l'axe de symétrie constituant l'abscisse de la courbe à tracer, étant donné que l'on connaît d'une part l'amplitude de ces trois points et, d'autre part leur écartement.

| VX | VY |
|------|------|
| X (t1) | Y (t1) |
| X (t2) | Y (t2) |
| X (t3) | Y (t3) |
| X (t4) | Y (t4) |
| X (t5) | Y (t5) |
| X (t6) | Y (t6) |
| X (t7) | Y (t7) |

| VX* | VY* | T |
|------|------|------|
| X (t1) | Y (t1) | 3 |
|  |  |  |
|  |  |  |
| X (t4) | Y (t4) |  |
|  |  |  |
|  |  |  |
| X (t7) | Y (t7) |  |

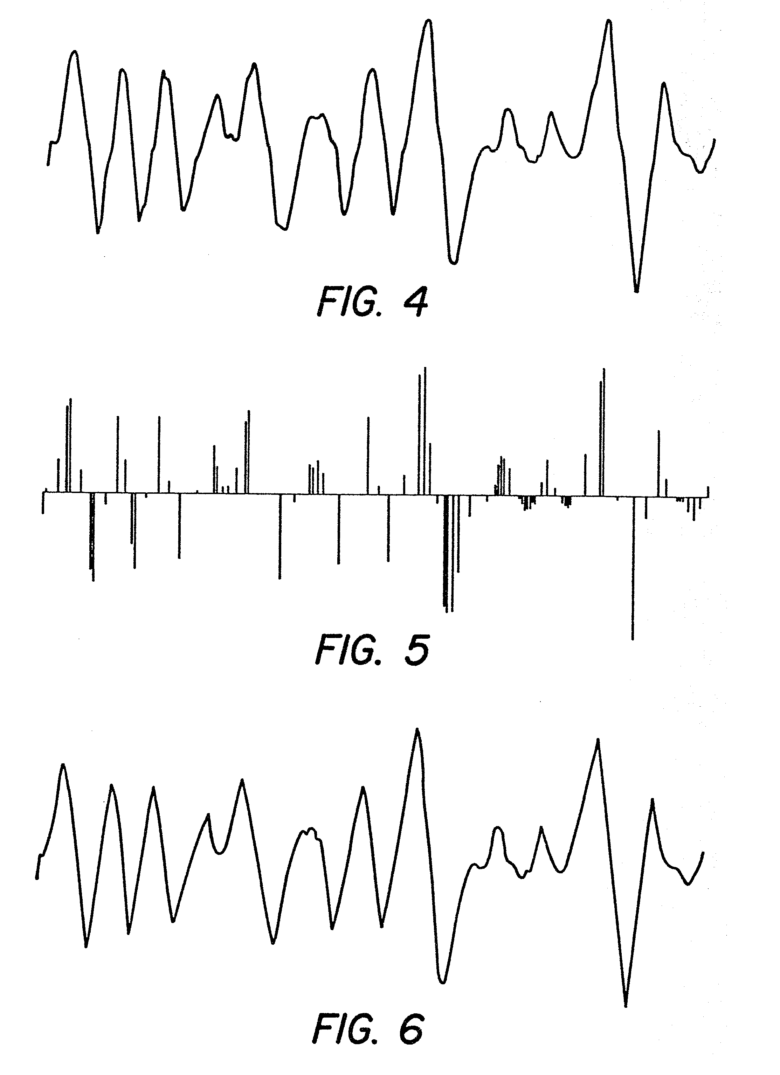

Le diagramme de la fig. 4 illustre le signal de vitesse constituant la référence et que l'on désire mettre en mémoire sous la forme numérique d'une sélection de points choisis de manière à permettre une restitution aussi fidèle que possible avec un nombre réduit de points.

Le diagramme de la fig. 5 illustre les différents points sélectionnés de cette courbe, selon le mode de sélection qui a été décrit précédemment avec application du critère du rapport des cordes.

Le diagramme de la fig. 6, illustre la courbe du signal de vitesse en utilisant le procédé d'interpolation parabolique avec chaque groupe de trois points non consécutifs espacés d'un nombre d'intervalles égaux. Les points isolés, c'est-à-dire ceux qui n'ont pas pu être "comprimés" sont reproduits séparément et raccordés aux paraboles par des segments de droites. On constate que cette courbe est extrêmement semblable à la courbe initiale de la fig. 3, de sorte que la comparaison qui sera faite par rapport à cette courbe sera faite sans introduire d'erreur susceptible de fausser cette comparaison.

- 9 -                                    0199676

R E V E N D I C A T I O N S

1. Procédé de stockage numérique d'une courbe analogique d'un système de coordonnées rectangulaires X Y dans une mémoire et de traçage d'une courbe représentative de ladite courbe analogique à partir des valeurs stockées, caractérisé par le fait que l'on définit un intervalle élémentaire (T) sur l'un des axes (X) du système de coordonnées pour sélectionner une première série de points, cet intervalle élémentaire (T) donnant des points suffisamment rapprochés pour que leur liaison donne une courbe semblable à la courbe initiale, on détermine une deuxième série de points en établissant un rapport seuil entre la corde séparant deux points non consécutifs et la somme des cordes séparant chacun des points consécutifs à l'intérieur des deux points non consécutifs et on choisit l'intervalle entre ces deux points non consécutifs correspondant au plus grand rapport inférieur audit seuil, on établit l'adresse des points de chaque groupe de trois points non consécutifs ainsi déterminés ainsi que le nombre d'intervalles élémentaires (T) entre eux et leurs amplitudes ($a_1$, $a_2$ respectivement $a_3$) que l'on enregistre dans ladite mémoire, ainsi que l'adresse et l'amplitude des points isolés ne rentrant pas dans un groupe de trois points non consécutifs et que l'on trace ensuite ladite courbe représentative en établissant entre chaque groupe de trois points non consécutifs une parabole par rapport à un axe de symétrie correspondant à l'axe desdits intervalles élémentaires à partir de l'équation:

$$Y_{(T)} = AT^2 + BT + C$$

dans laquelle $A = (a_1 + a_3 - 2a_2)/2T^2$
$$B = (a_3 - a_1)/2T$$
$$C = a_2$$

2. Procédé selon la revendication 1, caractérisé par le fait que l'on forme ladite courbe analogique en établissant un odogramme correspondant à la combinaison des composantes de la vitesse du tracé d'une signature de référence faite dans un système de coordonnées rectangulaires et servant à la comparaison avec l'odogramme de la vitesse du tracé d'une autre signature.

3. Procédé selon la revendication 1, caractérisé par le fait que l'on fixe un rapport entre le nombre de points de la première série et ceux de la deuxième série, que l'on calcule le rapport obtenu après avoir déterminé les points de la deuxième série, que l'on ajuste ledit rapport seuil entre les cordes en fonction du rapport obtenu entre lesdits points et on recommence la détermination des points de la deuxième série jusqu'à ce que ledit rapport entre les points des deux séries corresponde au rapport fixé.

FIG. 1

FIG. 2

*FIG. 3*

*FIG. 4*

*FIG. 5*

*FIG. 6*

## DOCUMENTS CONSIDERES COMME PERTINENTS

| Categorie | Citation du document avec indication, en cas de besoin des parties pertinentes | Revendication concernée | CLASSEMENT DE LA DEMANDE (Int Cl 4) |
|---|---|---|---|
| Y | PATENTS ABSTRACTS OF JAPAN, vol. 7, no. 290 (P-245)[1435], 24 décembre 1983; & JP - A - 58 163 080 (FUJITSU K.K.) 27-09-1983 * Abrégé; figure 3b, page 538, colonne de droite, lignes 15,17,19 * | 1 | G 06 K 11/00 G 06 K 9/22 |
| Y | IBM TECHNICAL DISCLOSURE BULLETIN, vol. 15, no. 4, septembre 1972, page 1151, New York, US; M.W. BLASGEN et al.: "Smoother" * En entier * | 1 | |
| A | GB-A-2 114 851 (SHAKEN CO. LTD.) * Abrégé; page 7, lignes 14-42 * | 1,3 | |

**DOMAINES TECHNIQUES RECHERCHES (Int. Cl 4)**

| Categorie | Citation | Revendication | |
|---|---|---|---|
| A | PATTERN RECOGNITION, vol. 8, no. 2, avril 1976, pages 63-71, Pergamon Press, GB; S.-I. HANAKI et al.: "An on-line character recognition aimed at a substitution for a billing machine keyboard" * Page 64, paragraphe 3.2 * | 1 | G 06 K |

--- -/-

Le present rapport de recherche a été établi pour toutes les revendications

| Lieu de la recherche | Date d'achèvement de la recherche | Examinateur |
|---|---|---|
| LA HAYE | 04-08-1986 | SONIUS M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cite dans la demande
L : cite pour d'autres raisons

& : membre de la même famille, document correspondant

OEB Form 1503 03 82

**0199676**

Numero de la demande

Office européen
des brevets

**RAPPORT DE RECHERCHE EUROPEENNE**

EP 86 81 0179

Page 2

## DOCUMENTS CONSIDERES COMME PERTINENTS

| Catégorie | Citation du document avec indication. en cas de besoin des parties pertinentes | Revendication concernee | CLASSEMENT DE LA DEMANDE (Int Cl 4) |
|---|---|---|---|
| A | IBM TECHNICAL DISCLOSURE BULLETIN, vol. 16, no. 12, mai 1974, pages 3947-3949, New York, US; D. ESTEBAN et al.: "Quadratic interpolation used as low-pass filter" * Page 3947, dernière ligne - page 3948, ligne 14 * | 1 | |
| | --- | | |
| A | ELECTRONICS INTERNATIONAL, vol. 56, no. 15, juillet 1983, pages 86,90, New York, US; R.T. GALLAGHER: "Signature verifier exploits writing speed" * Figure * | 2 | |
| | ----- | | |

DOMAINES TECHNIQUES
RECHERCHES (Int Cl.4)

Le présent rapport de recherche a éte etabli pour toutes les revendications

| Lieu de la recherche | Date d achevement de la recherche | Examinateur |
|---|---|---|
| LA HAYE | 04-08-1986 | SONIUS M.E. |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82